# EUROPÄISCHE PATENTSCHRIFT

(11) **EP 0 528 132 B1**
(45) Veröffentlichungstag und Bekanntmachung des Hinweises auf die Patenterteilung: **15.01.1997**
(21) Anmeldenummer: 92110179.6
(22) Anmeldetag: 17.06.1992
(51) Int. Cl.: B29C 65/18, B29C 65/02, B29D 23/18

(54) **Vorrichtung zur Herstellung von Faltenbälgen**
Device for the production of bellows
Dispositif pour la fabrication des soufflets

(30) Priorität: 16.08.1991 DE 4127091
(43) Veröffentlichungstag der Anmeldung: 24.02.1993
(73) Patentinhaber: Arno Arnold GmbH, D-63179 Obertshausen (DE)
(72) Erfinder: Mang, Wolf Matthias, Dipl.-Kfm., W-6053 Obertshausen 1 (DE)
(74) Vertreter: Missling, Arne, Dipl.-Ing.

(56) Entgegenhaltungen:
- DE-A- 2 551 139
- DE-A- 3 225 369
- DE-A- 3 735 452
- DE-A- 3 929 770
- FR-A- 1 192 442
- US-A- 2 837 121
- US-A- 4 188 253

## Beschreibung

Die Erfindung bezieht sich auf eine Vorrichtung zur Herstellung von Faltenbälgen durch Verschweißen von Stützrahmen mit einer faltenbalgartig gefalteten Folie.

Faltenbälge der genannten Art umfassen profilierte Stützrahmen, welche zur Abstützung und Führung der Faltenbalg-Folie dienen. Die Faltenbalg-Folie ist zickzackförmig oder faltenbalgartig gefaltet und kann, so wie dies aus dem Stand der Technik bekannt ist, zusammengeschoben oder expandiert werden, um beispielsweise Führungsbahnen oder ähnliches abzudecken und vor Verschmutzung zu schützen. Dabei dienen die Stützrahmen dazu, die Faltenbalg-Folie in einem vorgegebenen Abstand zu der Führungsbahn zu führen bzw. zu haltern.

Bei der Herstellung der Faltenbälge ist es erforderlich, die Folie mit dem jeweiligen Stützrahmen zu verbinden. Dies geschieht durch Verschweißen oder Verkleben der die Abdeckung bildenden Folie mit der Kante des Stützrahmens. Aus der DE-OS 37 35 452 ist ein derartiger Faltenbalg vorbekannt, bei welchem die Folie mittels eines Schweißwerkzeuges mit dem Stützrahmen verbunden wird. Die Folie wird dabei in einem ersten Arbeitsschritt zickzackförmig gefaltet und auf den jeweiligen Stützrahmen aufgelegt. Nachfolgend wird das Schweißwerkzeug, welches einen U-förmigen Querschnitt aufweist, von außen gegen die Folie und den Stützrahmen gepresst, so daß der Schweiß- oder Siegelvorgang durchgeführt werden kann. Dabei erweist es sich als nachteilig, daß jedem Stützbalken ein separates Siegelwerkzeug zugeordnet werden muß. Der Herstellungsvorgang benötigt somit einen erheblichen Zeitaufwand. Weiterhin sind relativ komplizierte Vorrichtungen erforderlich, um den Stützbalken und die Folie passend zu dem Werkzeug zu positionieren.

Eine alternative Ausgestaltungsform des Herstellungsverfahrens beschreibt die DE-PS 32 25 369. Hierbei wird die Folie auf ein aus einer Vielzahl von Stützrahmen bestehendes Paket aufgelegt, wobei dieses gesamte Paket dem Schweiß- oder Siegelvorgang ausgesetzt wird. Nachteilig hierbei ist, daß nur Faltenbälge vorgegebener Länge, d.h. mit einer vorgegebenen Anzahl an Stützrahmen verschweißt werden können. Sobald eine größere oder eine kleinere Anzahl von Stützrahmen vorgesehen sind, bereitet dieses Verfahren, bedingt durch das einzige verwendete Werkzeug, erhebliche Schwierigkeiten.

Der Erfindung liegt die Aufgabe zugrunde, eine Vorrichtung zur Herstellung von Faltenbälgen der eingangs genannten Art zu schaffen, welche bei einfachem Aufbau und einfacher, betriebssicherer Anwendbarkeit eine automatische Herstellung von Faltenbälgen beliebiger Abmessungen ermöglicht.

Erfindungsgemäß wird die Aufgabe dadurch gelöst, daß eine Führungsbahn vorgesehen ist, welche zur vertikalen Lagerung der Stützrahmen dient und daß oberhalb der Führungsbahn um eine quer zur Längsrichtung der Führungsbahn angeordnete Drehachse drehbar gelagert eine Schweißwalze angeordnet ist, welche zahnradartig mit parallel zu der Drehachse ausgerichteten, im wesentlichen einen U-förmigen Querschnitt aufweisenden Längsnuten versehen ist, welche jeweils gegen einen Stützrahmen und die auf diesen aufgelegte Folie anpressbar sind.

Vorteilhafte Weiterbildungen der Erfindung sind in den abhängigen Ansprüchen beschrieben.

Die erfindungsgemäße Vorrichtung zeichnet sich durch eine Reihe erheblicher Vorteile aus. Zunächst ist es durch Verwendung der Schweißwalze möglich, kontinuierlich Faltenbälge beliebiger Länge, d.h. mit einer beliebigen Anzahl an Stützrahmen zu fertigen. Die Vorrichtung ist somit zur kontinuierlichen, vollautomatischen Arbeitsweise geeignet. Hieraus ergeben sich unter anderem erhebliche Kostenvorteile. Weiterhin vereinfacht sich der gesamte Schweiß- bzw. Siegelvorgang, da die Stützrahmen und die auf diese aufgelegte Folie durch die Schweißwalze in sicherer Weise gegriffen und während des Schweißvorganges mit Druck beaufschlagt werden. Die Führungsbahn dient dabei als Gegenlager zur Abstützung der Stützrahmen.

In einer besonders günstigen Ausgestaltung der Erfindung ist vorgesehen, daß die Längsnut der Schweißachse an ihrem Bodenbereich eben ausgebildet ist. Dies führt zu einer ebenen Verschweißung der Folie mit der Kante des Stützrahmens, so daß eine hochfeste, dichte Verschweißung oder Versiegelung erzielt wird. Es versteht sich in diesem Zusammenhang für den Fachmann, daß auch andere Verbindungsverfahren erfindungsgemäß einsetzbar sind, beispielsweise Heißverkleben, Ultraschallschweißen oder ähnliches.

Die Längsnut weist bevorzugterweise in ihrem Bodenbereich eine Breite auf, welche im wesentlichen gleich ist zu der Dicke des Stützrahmens und der auf diesen aufgelegten Folie. Durch die Schweißwalze erfolgt somit nicht nur ein Aufdrücken der Folie auf die oben liegende Kante des Stützrahmens, vielmehr wird die Folie auch mit den Seitenbereichen des Stützrahmens verbunden.

Die Längsnut kann erfindungsgemäß, bezogen auf deren Querschnitt, abgeschrägt oder abgerundet sein, die Wandungen können beispielsweise eine evolventenartige Form aufweisen. Hierdurch ist gewährleistet, daß die Folie und die Stützrahmen beim Einlaufen in die Schweißwalze schonend und gleichmäßig gegriffen und gegen den Grund der Längsnut gedrückt werden.

Um geringfügige Formabweichungen der Stützrahmen ausgleichen zu können und um einen stets gleichmäßigen Anpressdruck der Schweißwalze zu gewährleisten, ist vorgesehen, daß die Schweißwalze elastisch gegen den Stützrahmen vorgespannt gelagert ist.

Die Schweißwalze weist bevorzugterweise eine Breite auf, welche gleich oder größer ist, als die Breite des Stützrahmens, so daß sichergestellt ist, daß die Folie über die gesamte Länge des Stützrahmens mit diesem verbunden wird.

Die Schweißwalze ist, wie bei derartigen Werkzeugen bekannt, mit einer Heizeinrichtung versehen, wobei mehrere Heizeinrichtungen vorgesehen sein können, um jeweils nur die Längsnut zu beheizen, welche sich gerade im Einsatz befindet oder als nächste auf einen Stützrahmen aufgebracht werden soll.

Um die Stützrahmen und die auf diese aufgelegten Folienbereiche gleichmäßig ausgerichtet und beabstandet der Schweißwalze zuzuführen, kann es besonders günstig sein, eine Transportvorrichtung zu verwenden. Es ist selbstverständlich auch, abhängig vom Durchmesser und der Ausgestaltung der Schweißwalze möglich, die Stützrahmen direkt der Schweißwalze durchzuführen, wobei diese aus einer Aufreihung von Stützrahmen jeweils den nächsten greift und in die passende Längsnut einzieht. Die Verwendung einer Transportvorrichtung gewährleistet ein höheres Maß an Betriebssicherheit, zumal sichergestellt werden kann, daß die einzelnen Stützrahmen sich vertikal ausgerichtet der Schweißwalze nähern. Die Transportvorrichtung umfaßt in einem bevorzugten Ausführungsbeispiel ein Förderband, welches mit Mitnehmern versehen ist, welche die Folie und den Stützrahmen greifen. Das Förderband kann entweder oberhalb der Stützrahmen und der Folie, d.h. in Förderrichtung vor der Schweißwalze angeordnet sein, es ist jedoch auch möglich, jeweils seitlich an dem Stützrahmen ein Förderband zu montieren, um die Stützrahmen bei dem gesamten Durchlauf durch die erfindungsgemäße Vorrichtung präzise zu führen bzw. zu lagern.

Es ist erfindungsgemaß selbstverständlich auch möglich, im Bereich der Führungsbahn geeignete Transportmittel vorzusehen, beispielsweise ein profiliertes Förderband oder taktweise arbeitende zahnstangenartige Elemente.

Es ist auch denkbar, anstelle der zahnradartig ausgebildeten Schweißwalze eine Schweißwalze mit einer glatten, runden Oberfläche zu verwenden. In diesem Fall ist jedoch eine genaue Fixierung des Faltenbalges beim Schweißvorgang zu gewährleisten.

Im folgenden wird die Erfindung an Hand eines Ausführungsbeispieles in Verbindung mit der Zeichnung beschrieben. Dabei zeigt:
- Fig. 1: eine schematische Seitenansicht eines Teilbereiches der erfindungsgemäßen Vorrichtung,
- Fig. 2: eine Seitenansicht, teils im Schnitt, eines Teilbereiches der erfindungsgemäßen Transportvorrichtung und
- Fig. 3: eine Teil-Schnittansicht, ebenfalls in schematischer Darstellung, in Blickrichtung III-III von Fig. 1.

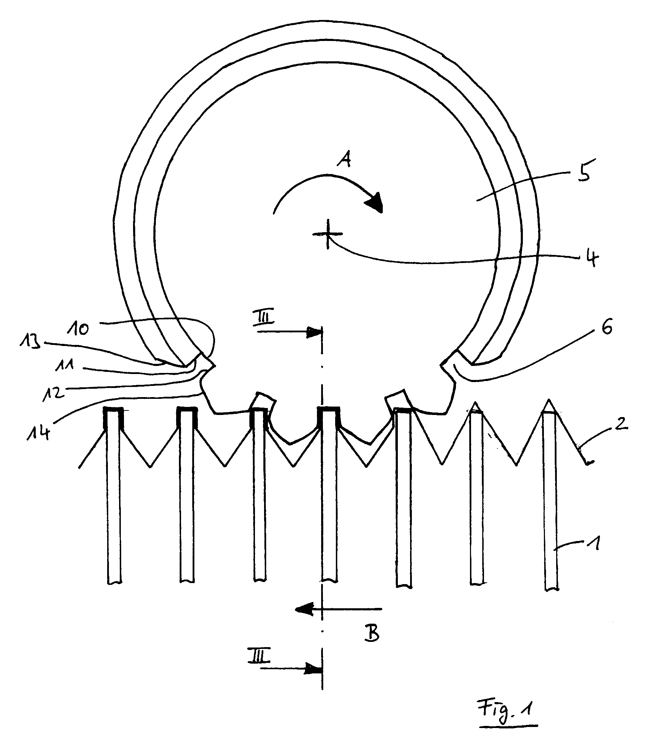

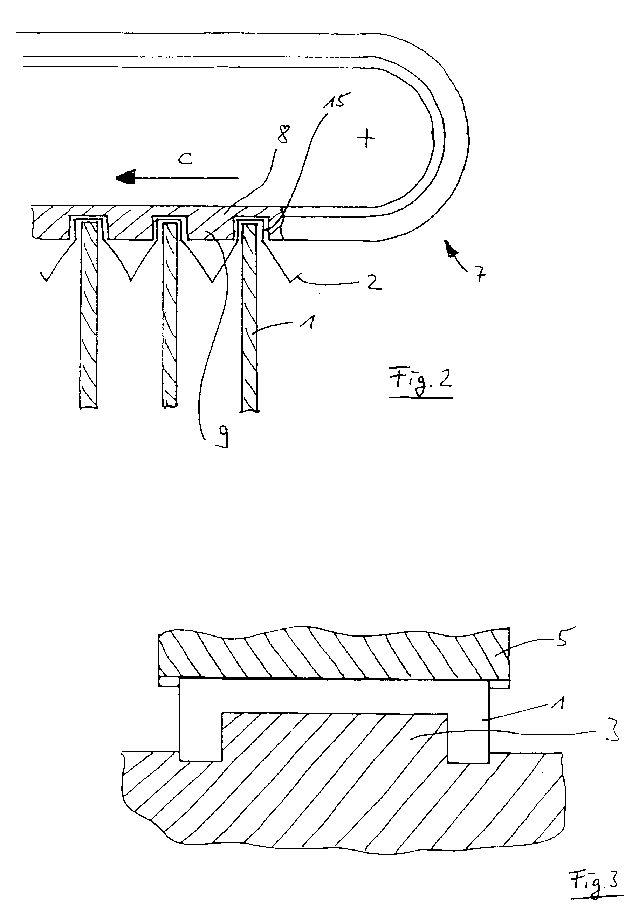

Die erfindungsgemäße Vorrichtung umfaßt eine Führungsbahn 3, welche, wie in Fig. 3 gezeigt, profiliert ausgebildet ist und zu der im wesentlichen U-förmigen Form von Stützrahmen 1 paßt. Die Stützrahmen 1 können somit auf die Führungsbahn 3 aufgesetzt und längs dieser verschoben werden. Die Stützrahmen 1 sind plattenförmig ausgebildet und bestehen beispielsweise aus einem schweiß- oder siegelbaren Kunststoffmaterial.

Zur Herstellung eines Faltenbalges wird eine Folie 2, welche faltenbalgartig oder zickzackartig gefaltet ist, mit den Stützrahmen 1 verbunden. In der rechten Bildhälfte der Fig. 1 ist der Ausgangszustand dargestellt, in diesem sind die Stützrahmen 1 auf der nicht gezeigten Führungsbahn 3 aufgesetzt, die faltenbalgartig gefaltete Folie 2 ist auf die Stützrahmen 1 aufgelegt.

Die linke Bildhälfte der Fig. 1 zeigt den fertigen Zustand des erfindungsgemäßen Faltenbalges, ebenfalls in stark vereinfachter, schematischer Darstellung. Es ist zu erkennen, daß die Folie 2 nicht nur an der oberen Kante des Stützrahmens 1, sondern auch an einem Bereich der Seitenwandungen des Stützrahmens 1 mit diesem verschweißt ist, so daß die Folie in dem Schweißbereich eine im wesentlichen U-förmige Form aufweist. Hierdurch wird eine besonders feste und dauerhafte Verbindung mit dem Stützrahmen erreicht.

Erfindungsgemäß ist eine Schweißwalze 5 vorgesehen, welche um eine Achse 4 drehbar gelagert ist. Die Drehrichtung der Schweißwalze 5 ist durch den Pfeil A angegeben, während die Transportrichtung der Stützrahmen 1 durch den Pfeil B gezeigt ist. Die Schweißwalze 5 ist zahnradartig ausgebildet und weist eine Vielzahl von an ihrem Umfang gleichmäßig beabstandeten Längsnuten 6 auf. Zur Vereinfachung der Darstellung sind in Fig. 1 lediglich fünf derartige Längsnuten gezeigt, es versteht sich, daß der gesamte Umfang der Schweißwalze 5 mit derartigen Längsnuten versehen ist. Die Längsnuten 6 erstrecken sich parallel zu der Drehachse 4.

Jede Längsnut 6 umfaßt einen im wesentlichen ebenen Bodenbereich 10, sowie seitliche Wandungen 11 und 12, welche senkrecht zu dem Bodenbereich 10 angeordnet sind, so daß zumindest der Basisbereich der Längsnut 6 einen im wesentlichen U-förmigen Querschnitt aufweist. Die Flanken 13 und 14 sind abgeschrägt oder abgerundet, um eine sicheres Einführen bzw. Ergreifen des jeweiligen Stützrahmens 1 und der Folie 2 zu erleichtern und um die verschweißten Stützrahmen ohne Beschädigung aus der Schweißwalze 5 abführen zu können.

Die Fig. 1 zeigt unterschiedliche Bearbeitungszustände. Im mittleren Bereich der Fig. 1 ist ein Stützrahmen 1 zusammen mit der auf ihn aufgelegten Folie vollständig in die Längsnut 6 eingeführt und wird in diesem Zustand mit einem ausreichenden Siegel- oder Schweißdruck beaufschlagt, um den Fügevorgang durchführen zu können. Die rechts von der mittigen Längsnut 6 angeordnete Längsnut ist in einem Zustand gezeigt, in welchem der Stützrahmen 1 gerade ergriffen wird. Dabei ist zu erkennen, daß beim Einführen des Stützrahmens 1 in die Längsnut 6 die Folie 2, welche bisher nur auf den Stützrahmen 1 aufgelegt war, ergriffen und an dessen Kontur angelegt wird. Die links von der mittigen Längsnut angeordnete Längsnut zeigt einen Zustand, in welchem der fertige Stützrahmen mit der verschweißten Folie die Längsnut verläßt.

Für den Fachmann ergeben sich vielfältige Abwandlungsmöglichkeiten bei der Ausgestaltung der Schweißwalze 5 bzw. der Längsnuten 6, insbesondere in Abhängigkeit vom Durchmesser der Schweißwalze 5, von der Dicke der Stützrahmen 1 sowie von dem Flankenbereich des Stützrahmens 1, an welchem dieser mit der Folie 2 zu verschweißen ist.

Die Fig. 2 zeigt einen weiteren Teil der erfindungsgemäßen Vorrichtung, nämlich eine Transportvorrichtung 7, welche ein umlaufendes Förderband 8 aufweist. Die Führungs- und Antriebsmittel des Förderbandes 8 sind nicht dargestellt, da diese aus dem Stand der Technik bekannt sind. Der Pfeil C zeigt die Bewegungsrichtung des Förderbandes 8. Bei dem gezeigten Ausführungsbeispiel umfaßt das Förderband 8 jeweils rechteckige Mitnehmer 9, zwischen denen eine Nut 15 ausgebildet ist, in welche jeweils ein Stützrahmen 1 und die auf diesen aufgelegte Folie 2 einführbar ist. Bei der gezeigten Ausgestaltung ist die Nut 15 so dimensioniert, daß die Folie 2 bereits um den rechteckigen Kantenbereich des Stützrahmens 1 gespannt und entsprechend vorgeformt wird. Hierdurch kann sich die Zuführung zu der Schweißwalze 5 vereinfachen.

Die Fig. 3 zeigt eine Teil-Schnittansicht entlang der Linie III-III von Fig. 1, um die Ausgestaltung der Führungsbahn 3 zur Lagerung der Stützrahmen 1 zu verdeutlichen.

## Patentansprüche

1. Vorrichtung zur Herstellung von Faltenbälgen durch Verschweißen von Stützrahmen (1) mit einer faltenbalgartig gefalteten Folie (2), gekennzeichnet durch eine Führungsbahn (3) zur vertikalen Lagerung der Stützrahmen (1) und eine oberhalb der Führungsbahn (3) um eine quer zur Längsrichtung der Führungsbahn (3) angeordnete Drehachse (4) drehbar gelagerte Schweißwalze (5), welche zahnradartig mit parallel zu der Drehachse (4) ausgerichteten, im wesentlichen einen U-förmigen Querschnitt aufweisenden Längsnuten (6) versehen ist, welche jeweils gegen einen Stützrahmen (1) und die auf diesen aufgelegte Folie (2) anpressbar sind.

2. Vorrichtung nach Anspruch 1, dadurch gekennzeichnet, daß die Längsnut (6) an ihrem Bodenbereich (10) eben ausgebildet ist.

3. Vorrichtung nach Anspruch 1 oder 2, dadurch gekennzeichnet, daß die Längsnut (6) in ihrem Bodenbereich (10) eine, bezogen auf deren Querschnitt, Breite aufweist, welche im wesentlichen gleich ist zu der Dicke des Stützrahmens (1) und der auf diesen aufgelegten Folie (2).

4. Vorrichtung nach einem der Ansprüche 1 bis 3, dadurch gekennzeichnet, daß die Längsnut (6) mit, bezogen auf deren Querschnitt, abschrägten oder abgerundeten Wandungen versehen ist.

5. Vorrichtung nach einem der Ansprüche 1 bis 4, dadurch gekennzeichnet, daß die Schweißwalze (5) elastisch gegen den Stützrahmen (1) vorgespannt gelagert ist.

6. Vorrichtung nach einem der Ansprüche 1 bis 5, dadurch gekennzeichnet, daß die Schweißwalze (5) eine Breite aufweist, welche gleich oder größer ist, als die Breite des Stützrahmens (1).

7. Vorrichtung nach einem der Ansprüche 1 bis 6, dadurch gekennzeichnet, daß die Schweißwalze (5) mit einer Heizeinrichtung versehen ist.

8. Vorrichtung nach einem der Ansprüche 1 bis 7, gekennzeichnet durch eine Transportvorrichtung (7) zur Zuführung der Stützrahmen (1) und der Folie (2) in vorbestimmter Ausrichtung zu der Schweißwalze (5).

9. Vorrichtung nach Anspruch 8, dadurch gekennzeichnet, daß die Transportvorrichtung (7) zumindest ein Förderband (8) umfaßt, welches mit Mitnehmern (9) zur beabstandeten Förderung der Stützrahmen (1) versehen ist.

10. Vorrichtung nach Anspruch 9, dadurch gekennzeichnet, daß das Förderband (8) oberhalb der Stützrahmen (1) angeordnet ist.

11. Vorrichtung nach Anspruch 8 oder 9, dadurch gekennzeichnet, daß das Förderband (8) seitlich der Stützrahmen (1) angeordnet ist.

## Claims

1. A device for the production of bellows by the welding of support frames (1) to a sheet (2) folded in the manner of bellows, characterised by a track (3) for vertical mounting of the support frames (1) and a welding roll (5) rotatably mounted above the track (3) about an axis of rotation (4) arranged transversely to the longitudinal direction of the track (3), which welding roll is provided - in the manner of a cogwheel - with longitudinal grooves (6) aligned parallel to the axis of rotation (4) and having a substantially U-shaped cross section, and the respective longitudinal grooves can be pressed against a support frame (1) and the sheet (2) mounted thereon.

2. A device according to Claim 1, characterised in that the bottom area (10) of the longitudinal groove (6) is flat.

3. A device according to Claim 1 or 2, characterised in that the bottom area (10) of the longitudinal groove (6), in relation to the cross section thereof, has a width substantially identical to the thickness of the support frame (1) and the sheet (2) mounted thereon.

4. A device according to any one of Claims 1 to 3, characterised in that the longitudinal groove (6), in relation to the cross section thereof, is provided with inclined or rounded walls.

5. A device according to any one of Claims 1 to 4, characterised in that the welding roll (5) is resiliently mounted with respect to the support frame (1) in a prestressed manner.

6. A device according to any one of Claims 1 to 5, characterised in that the width of the welding roll (5) is identical or larger than the width of the support frame (1).

7. A device according to any one of Claims 1 to 6, characterised in that the welding roll (5) is provided with heating means.

8. A device according to any one of Claims 1 to 7, characterised by a conveying device (7) for supplying the support frames (1) and the sheet (2) in a predetermined arrangement to the welding roll (5).

9. A device according to Claim 8, characterised in that the conveying device (7) comprises at least one conveyor belt (8) provided with engaging members (9) for spaced delivery of the support frames (1).

10. A device according to Claim 9, characterised in that the conveyor belt (8) is arranged above the support frames (1).

11. A device according to Claim 8 or 9, characterised in that the conveyor belt (8) is arranged at the side of the support frames (1).

## Revendications

1. Dispositif de fabrication de soufflets à plis par soudure de cadres supports (1) sur une feuille (2), repliée de façon à former un soufflet à plis, caractérisé par une piste de guidage (3) pour disposer verticalement les cadres supports (1), et par un cylindre de soudage (5) monté rotatif, au dessus de la piste de guidage (3), autour d'un axe de rotation (4) disposé perpendiculairement à la direction longitudinale de la piste de guidage (3), ce cylindre de soudage (5) étant équipé, à la façon d'une roue dentée, de rainures longitudinales (6) présentant essentiellement une section en U et orientées, parallèlement à l'axe de rotation (4), ces rainures pouvant être chacunes appliquées par pression contre un cadre support (1) et la feuille (2) placée sur lui.

2. Dispositif suivant la revendication 1, caractérisé en ce que la rainure longitudinale (6), dans la zone de son fond (10), est de forme plane.

3. Dispositif suivant la revendication 1 ou la revendication 2, caractérisé en ce que la rainure longitudinale (6), dans la zone de son fond (10), présente, en ce qui concerne sa section, une largeur qui est sensiblement égale à l'épaisseur du cadre support (1) et de la feuille (2) placée sur lui.

4. Dispositif suivant l'une des revendications 1 à 3, caractérisé en ce que la rainure longitudinale (6) est, en ce qui concerne sa section, munie de parois chanfreinées ou arrondies.

5. Dispositif suivant l'une des revendications 1 à 4, caractérisé en ce que le cylindre de soudage (5) est monté avec une précontrainte l'appuyant élastiquement contre le cadre support (1).

6. Dispositif suivant l'une des revendications 1 à 5, caractérisé en ce que le cylindre de soudage (5) présente une largeur égale ou supérieure à la largeur du cadre support (1).

7. Dispositif suivant l'une des revendications 1 à 6, caractérisé en ce que le cylindre de soudage (5) est équipé d'un dispositif de chauffe.

8. Dispositif suivant l'une des revendications 1 à 7, caractérisé par un dispositif de transport (7) pour présenter au cylindre de soudage (5) les cadres supports (1) et la feuille (2) selon une direction prédéfinie.

9. Dispositif suivant la revendication 8, caractérisé en ce que le dispositif de transport (7) comporte au moins une bande de transport (8), qui est équipée d'éléments d'entraînement (9) pour faire avancer les cadres supports (1) à une certaine distance les uns des autres.

10. Dispositif suivant la revendication 9, caractérisé en ce que la bande de transport (8) est disposée au-dessus des cadres supports (1).

11. Dispositif suivant la revendication 8 ou la revendication 9, caractérisé en ce que la bande de transport (8) est disposée sur le côté des cadres supports (1).
